# EUROPÄISCHE PATENTANMELDUNG

(11) **EP 2 386 410 A1**
(43) Veröffentlichungstag der Anmeldung: **16.11.2011**
(21) Anmeldenummer: 11163724.5
(22) Anmeldetag: 26.04.2011
(51) Int. Cl.: B32B 27/32, B65D 1/34, B65D 81/34, B65D 43/02, B65D 51/20

(54) **Kunststoff-Folienanordnung**

(30) Priorität: 07.05.2010 DE 102010016850
(71) Anmelder: Südpack Verpackungen GmbH & Co. KG, 88416 Ochsenhausen (DE)
(72) Erfinder: Grimbacher, Carolin, 88416 Ochsenhausen (DE); Brass, Peter, 88416 Steinhausen (DE)
(74) Vertreter: Hutzelmann, Gerhard

(57) **Zusammenfassung**

Kunststoff-Folienanordnung (1) mit Siegel- und Peeleigenschaften, insbesondere zur Verwendung als Deckelfolie, wobei die Folienanordnung (1) mindestens eine Siegelschicht (2), eine Peelschicht (3) und eine Rückenschicht (4) auf der von der Siegelschicht (2) abgewandten Seite der Peelschicht (3) aufweist, wobei die Siegelschicht (2) aus vorzugsweise einem mit einem Kunststoff siegelfähigen Material besteht und die Peelschicht (3) aus einem vorzugsweise an der Grenzschicht zur Siegelschicht (2) oder an der Grenzschicht zur Rückenschicht (4) delaminierenden Material besteht und wobei die Rückenschicht (4) aus einem die Peelschicht (3) stützenden Material bestehen kann.

## Beschreibung

Die Erfindung bezieht sich auf eine Kunststoff-Folienanordnung mit Siegel- und Peeleigenschaften, insbesondere zur Verwendung als Deckelfolie.

Siegelbare Folienanordnung werden oftmals zum Verschließen von Fleisch- oder Menüschalen eingesetzt. Aber auch bei anderen Verpackungen werden solche Folienanordnungen verwendet. Bei vielen Verpackungen wird aber auch eine leichte Öffenbarkeit gefordert. Dies kann durch Peeleigenschaften der Folienanordnung gewährleistet werden.

Hierbei besteht aber gerade bei Fleisch- und Menüschalen das Problem, daß diese nicht mehr sicher gesiegelt werden können, da in der Produktion auch im Bereich der Siegelnaht Verunreinigungen durch das Füllgut auftreten können.

Zudem besteht bei Peelausrüstungen das Problem, daß Fäden gezogen werden können, die dann beim Öffnen der Verpackung das Füllgut verunreinigen können.

Der Erfindung liegt daher die Aufgabe zugrunde, eine Folienanordnung vorzuschlagen, welche die genannten Probleme und Nachteile nicht aufweist und einerseits eine sichere Siegelbarkeit in Kombination mit guter Haltbarkeit und andererseits eine leichte Öffenbarkeit auch bei Verpackungen sicherzustellen vermag, bei denen nicht ausgeschlossen werden kann, daß der Siegelbereich verunreinigt ist.

Diese Aufgabe wird erfindungsgemäß dadurch gelöst, daß die Folienanordnung mindestens eine Siegelschicht, eine Peelschicht und eine Rückenschicht auf der von der Siegelschicht abgewandten Seite der Peelschicht aufweist, wobei die Siegelschicht aus vorzugsweise einem mit einem Kunststoff siegelfähigen Material besteht und die Peelschicht aus einem vorzugsweise an der Grenzschicht zur Siegelschicht oder an der Grenzschicht zur Rückenschicht delaminierenden Material besteht und wobei die Rückenschicht aus einem die Peelschicht stützenden Material bestehen kann.

Hiermit wird eine sehr gute Verbindung mit einer weiteren Lage der Folienanordnung oder mit einer Schale oder dergleichen sichergestellt. Die Siegelschicht wird mit diesen versiegelt. Dabei können bei niedrigen Temperaturen siegelnde Materialien für die Siegelschicht je nach Anwendungsfall eingesetzt werden.

Dabei hat es sich als sehr vorteilhaft erwiesen, wenn die Siegelschicht als Siegellack, als siegelbare Folienschicht oder dergleichen ausgebildet ist, wobei diese aus Polymeren, vorzugsweise aus Polyolefinen, insbesondere aus Polyethylenen, Polypropylenen, deren Copolymeren und/oder deren Blends bestehen oder auf diesen basieren können.

Diese Materialien haben sich bereits seit langem als sehr gut siegelbar erwiesen. Gerade auf Polypropylen Schalen wurden in der Fleischindustrie, in der die meisten Verschmutzungen auftreten, damit sehr gute Ergebnisse erzielt. Je nach Materialauswahl kann das Siegelverhalten sehr gut eingestellt werden.

Sehr vorteilhaft ist es erfindungsgemäß auch, wenn die Peelschicht aus wenigstens einem Polymer besteht, und ein weiteres Material zugefügt ist, wobei das weitere Material ebenfalls ein Polymer sein kann, wobei die Materialien vorzugsweise nur eine eingeschränkte Verträglichkeit miteinander aufweisen.

Damit können auf einfache Art und Weise einstellbare Peeleigenschaften in dieser Schicht erzeugt werden. Ein Grenzschicht-Peel an der Grenze zur Siegelschicht oder an der Grenze zur Rückenschicht ist erzeugbar.

Dabei hat es sich gemäß einer Weiterbildung der Erfindung auch als sehr vorteilhaft erwiesen, wenn die Peelschicht aus einem ersten Polyolefin, insbesondere einem Polyethylen und/oder einem Polypropylen und/oder ihren Copolymere und/oder Blends und aus einem zweiten Material, nämlich einem zweiten Polyolefin, insbesondere einem Polyethylen und/oder einem Polypropylen und/oder ihren Copolymere und/oder Blends und/oder ein Acrylat, wobei ein unmodifiziertes oder modifiziertes Polypropylen-Ethylen-Acrylat vorgesehen sein kann.

Hiermit wurden beste Peel-Ergebnisse erzeugt, die auch keine unerwünschte Fadenbildung zeigten. Vielmehr wurde eine definierte Delamination innerhalb der Peelschicht bzw. an deren Grenzen erzielt.

Eine weitere sehr vorteilhafte Ausgestaltung der Erfindung liegt auch vor, wenn als erstes Polyolefin ein Polypropylen oder Polypropylen Copolymer vorgesehen ist und als zweites Polyolefin ein Polyethylen oder Polyethylen-Copolymer vorgesehen ist.

Damit wurden auch sehr gute Ergebnisse erzielt.

Äußerst vorteilhaft ist es dabei auch, wenn das erste Material zwischen 30 und 70 %, vorzugsweise zwischen 40 und 60% Anteil an der Peelschicht aufweist und das zweite Material zwischen 70 und 30 %, vorzugsweise zwischen 60 und 40 % Anteil an der Peelschicht aufweist.

Mit diesen Mischungsverhältnissen wurde ein Optimum bei der Peelfähigkeit bei gebräuchlichen Anwendungen in der Lebensmittelindustrie erzielt. Je nach eingestelltem Mischungsverhältnissen kann die Peelfähigkeit auf Heißpeel und Kaltpeel eingestellt werden, was bedeutet, daß die gewünschte Peelfähigkeit je nach Einstellung direkt nach dem Verschließen der Verpackung, nach dem Abkühlen oder auch nach einem nochmaligen Erhitzen besteht bzw. entsteht.

Eine weitere erfindungsgemäß sehr vorteilhafte Ausgestaltung liegt auch vor, wenn die Rückenschicht aus einem Polymer, insbesondere aus einem Polyolefin, vorzusgweise aus einem Polyethylen und/oder einem Polypropylen, ihren Copolymeren und/oder Blends besteht.

Diese Rückenschicht haftet wie vorgesehen auf der Peelschicht und kann auf der von der Peelschicht abgewandten Seite sehr gut mit weiteren Folienschichten verbunden sein. Zudem stabilisiert die Rückenschicht den Folienaufbau.

Dabei ist es sehr vorteilhaft, wenn die Rückenschicht ein E-Modul von mindestens 1000 MPa aufweist.

Hierdurch wird sichergestellt, daß die Folie beim Peelen nicht auseinanderreißt und die dafür nötige Elastizität aber auch Festigkeit aufweist.

Eine sehr vorteilhafte Weiterbildung der Erfindung liegt auch vor, wenn auf die Rückenschicht wenigstens eine weitere Folienschicht folgt, wobei diese Barriereeigenschaften aufweisen kann und wobei auch Haftvermittlerschichten vorgesehen sein können.

Damit können der Folienanordnung auch Barriereeigenschaften, angepasste Festigkeiten und andere Eigenschaften verliehen werden.

Dabei hat es sich als äußerst vorteilhaft erwiesen, wenn als Barriereschichten EVOH- und/oder Polyamid- und/oder Polyvinyldenchlorid-Folienschichten vorgesehen sein können.

Mit diesen Barrierematerialien wurden sehr gute Erfahrungen auch im Lebensmittelbereich gemacht.

Als äußerst vorteilhaft hat es sich auch erwiesen, wenn wenigstens eine weitere Folienschicht vorgesehen ist, die aus einem Polymer, insbesondere aus einem Polyester, einem Polyamid, Polypropylen, Polyethylen, deren Copolymere und Blends hergestellt sein kann.

Damit wird eine ausreichende Festigkeit des Folienaufbaus erzeugt.

Gemäß einer weiteren Ausgestaltung der Erfindung ist es auch sehr vorteilhaft, wenn die Folienanordnung im Extrusions- oder Coextrusionsverfahren hergestellt ist, wobei ein Cast- oder Blasverfahren eingesetzt worden sein kann, und daß die Folienanordnung ungereckt oder gereckt ausgeführt ist.

Hiermit ist die Folienanordnung auf einfache Art und Weise herstellbar. Es sind auch Anwendungen denkbar, bei denen die Folienanordnung zu Schalen oder dergleichen tiefgezogen wird.

Im folgenden wird die Erfindung anhand von zwei Ausführungsbeispielen veranschaulicht.

Dabei zeigen:
- Fig. 1: eine schematische Darstellung einer Folienanordnung mit drei Schichten, wobei auf eine Siegelschicht eine Peelschicht und dann eine Rückenschicht folgt,
- Fig. 2: eine schematische Darstellung einer Folienanordnung bei der zu den drei Schichten weitere fünf Schichten hinzugefügt sind,

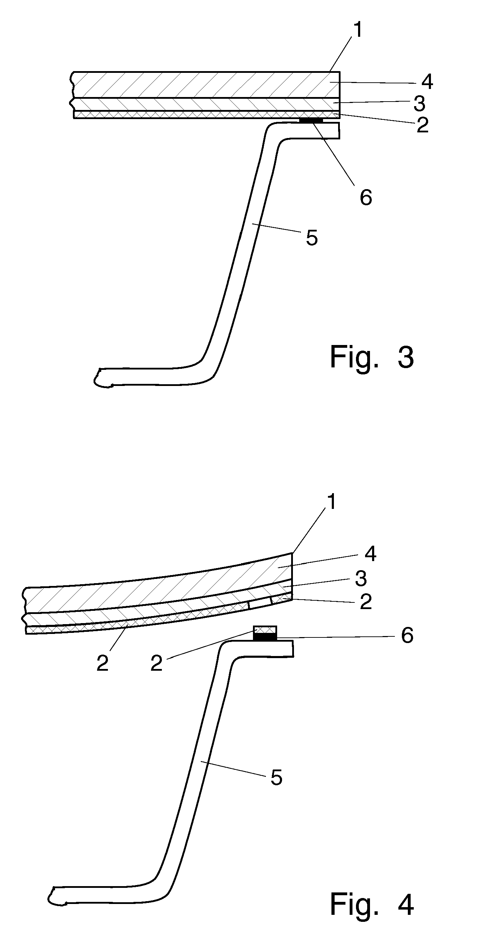

- Fig. 3: eine schematische Darstellung einer auf einer Schale aufgesiegelten Folienanordnung, und
- Fig. 4: eine schematische Darstellung einer auf einer Schale aufgesiegelten Folienanordnung, nachdem diese abgezogen und die Peeleigenschaften genutzt wurden.

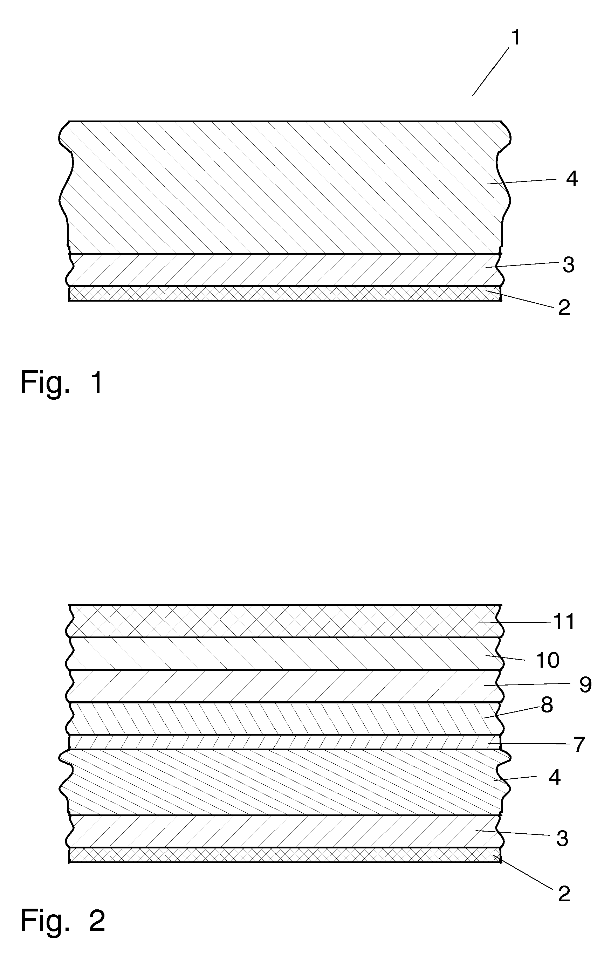

Mit 1 ist in Fig. 1 eine Folienanordnung mit einer Siegelschicht 2, einer darauf folgenden Peelschicht 3 und einer auf der der Siegelschicht 2 gegenüberliegenden Seite der Peelschicht 3 angeordneten Rückenschicht 4 bezeichnet.

Die Schichten der Folienanordnung 1 sind im Wesentlichen aus Polymeren hergestellt.

Die Siegelschicht 2 kann aus einem Siegellack oder einer Beschichtung bestehen. Im vorliegenden Ausführungsbeispiel ist die Siegelschicht 2 jedoch als Folienschicht ausgebildet, die aus siegelfähigen Polymeren, vorzugsweise aus siegelbaren Polyolefinen, insbesondere aus Polyethylenen, Polypropylenen, ihrer Copolymere und/oder Blends bestehen kann. Gerade für Fleischschalen, die zumeist aus Polypropylen gefertigt sind, wurden beste Ergebnisse erzielt, wenn die Siegelschicht aus einen Polypropylen, insbesondere einem Polypropylen Copolymer besteht oder dieses zumindest enthält. Der Schmelzpunkt Tm der Siegelschicht sollte in diesem Ausführungsbeispiel zwischen 135 und 145 °C liegen, um sicherstellen zu können, daß die Siegelnaht zwischen der Folienanordnung 1 und einer darunterliegenden Schale 5 eine ausreichende Festigkeit aufweist, wie dies auch von standardmäßig eingesetzten Deckelfolien in diesem Bereich bekannt ist, welche jedoch keinen Peeleffekt aufweisen.

Gerade bei Produktionsbedingungen kann nicht sichergestellt werden, daß beim Verpacken von beispielsweise Fleisch die Ränder der Schalen frei von Verunreinigungen sind. Daher ist es von größter Wichtigkeit, daß die Siegelnaht auch bei Vorhandensein solcher Verunreinigungen sicher hergestellt werden kann. Dies wird auch durch die vergleichsweise niedrige Schmelztemperatur erreicht, so daß die Siegelung schon sehr früh startet.

Auf die Siegelschicht 2 folgt die Peelschicht 3, die aus einer Mischung aus wenigstens zwei Materialien, insbesondere aus zwei Polymeren besteht, die zusammen die Peeleigenschaften erzeugen.

Bei diesen beiden Materialien ist wenigstens ein Polyolefin, insbesondere ein Polyethylen, ein Polypropylen, deren Copolymere und/oder Blends vorgesehen. Das zweite Material kann ebenfalls ein Polyolefin, insbesondere ein Polyethylen, ein Polypropylen, deren Copolymere und/oder Blends sein. Aber das zweite Material kann beispielsweise auch auf einer Acrylatbasis beruhen.

So kann beispielsweise eine Mischung von 30 bis 70%, vorzugsweise 40 bis 60% eines Polypropylens oder Copolymer-Polypropylens und 70 bis 30%, vorzugsweise 60 bis 40% eines Polyethylens oder Copolymer-Polyethylens zur Erstellung der Peelschicht 3 eingesetzt werden. Die Materialien können dabei modifiziert oder unmodifiziert sein.

Ebenso ist es denkbar, daß 30 bis 70%, vorzugsweise 40 bis 60% eines Polypropylens oder Co-PP und 70 bis 30%, vorzugsweise 60 bis 40% eines Polypropylen-Ethylen-Acrylates zur Erzeugung der Peelschicht 3 eingesetzt werden.

Andere Mischungen und Mischungsverhältnisse sind denkbar.

Über die Variation der Zusammensetzung der Peelschicht 3 kann die Peelfähigkeit und auch die Anfangsöffenbarkeit eingestellt werden.

Als Hilfsmittel zur Anfangsöffenbarkeit können Bruch-, Schnitt- und Ritzlinien ebenso vorgesehen werden wie Perforationen oder konstruktive Details, die eine gute Ergreifbarkeit ermöglichen.

Die Rückenschicht 4 kann ebenfalls aus einem Polymer, vorzusgweise aus einem Polyolefin, insbesondere aus einem Polyethylen, einem Polypropylen, deren Copolymere und/oder Blends bestehen.

Die Rückenschicht 4 sollte dabei ein E-Modul von mindestens 1000 MPa aufweisen, wodurch eine ausreichende Elastizität des Folienaufbaus vor allem beim Peelen sichergestellt wird. Zudem wird sichergestellt, daß die Folienanordnung 1 beim Peelen nicht auseinander reißt.

Wird nun die Folienanordnung 1 auf einer Schale 5 aufgesiegelt, so haftet diese durch die gute Siegelung sehr gut auf der Schale 5. Beim Öffnen wird im Bereich der Siegelnaht 6 die Folienanordnung in der Peelschicht 3 bzw. an deren Grenzen zur Siegelschicht 2 oder bevorzugt zur Rückenschicht 4 aufgerissen. Im Bereich der Siegelnaht 6 verbleibt zumindest die Siegelschicht 2 auf der Schale 5, wohingegen der Rest der Folienanordnung 1 abgezogen werden kann.

Die Peelschicht 3 reißt dabei ohne Fadenzug an den Grenzschichten auf, wodurch eine Verunreinigung des Füllgutes ausgeschlossen wird.

Damit unterscheidet sich die vorliegende Peelschicht 3 auch grundlegend von gebräuchlichen Peelschichten, die sehr zum Fadenzug neigen, vor allem, wenn diese innerhalb der Schicht peelen.

Von daher ist vorzusgweise ein Peelen an den Grenzflächen der Peelschicht 3 erwünscht. Die Peelschicht 3 wird durch die Materialauswahl und das jeweilige Mischungsverhältnis auch an diese Eigenschaft angepasst.

Vor allem wird so auch sichergestellt, daß das Auftrennen der Peelschicht 3 immer auf einem kurzen Weg geschieht, wodurch auch der Fadenzug und damit Verunreinigungen vermieden werden.

Je nach Mischungsverhältnis und Materialauswahl kann auch eingestellt werden, ob ein Kaltpeel oder ein Heißpeel stattfinden kann. Dies bedeutet, daß damit eingestellt werden kann, ob die Verpackung direkt nach dem Verpacken bereits geöffnet werden kann, oder ob diese zunächst abkühlen muss, damit der zu erzielende Peeleffekt stattfinden kann. Ebenso ist es denkbar, daß die Peelschicht 3 so eingestellt wird, daß der gewünschte Peeleffekt erst nach einem gezielten Erhitzen der Verpackung auftritt, womit ein versehentliches Öffnen einer Garverpackung zum Beispiel vor dem Garen vermieden wird.

Auch kann so ein versehentliches Öffnen der Verpackung noch während der Produktion und dem Transport vermieden werden. Andererseits ist es aber auch denkbar, daß die Verpackung gleich nach dem Verpacken leicht geöffnet werden kann.

Die Rückenschicht stabilisiert die Folienanordnung 1 vor allem beim Öffnen der Verpackung und sorgt so dafür, daß diese nicht zerreißt.

Auf der von der Peelschicht 3 abgewandten Seite der Rückenschicht 4 können weitere Folienschichten angeordnet werden.

Diese weiteren Folienschichten können beispielsweise als Barriereschichten dienen oder aber die mechanischen Eigenschaften der Folienanordnung 1 bestimmen.

So ist es, wie in Fig. 2 dargestellt, denkbar, daß auf die Rückenschicht 4 eine Haftvermittlerschicht 7 folgt, die einen gute Verbindung zu einer Barriere- oder Folienschicht 8 erzeugt. Auf die Barriere- oder Folienschicht 8 kann eine weitere Barriere- oder Folienschicht 9 folgen, auf die eine Bedruckungsschicht 10 und eine Abdeckschicht 11 folgt.

Die Barriere- oder Folienschichten 8 und 9 können beispielsweise aus EVOH, Polyamid und/oder Polyvinyldenchlorid hergestellt sein. Es sind aber auch Schichten aus anderen Polymeren, insbesondere aus Polyester, Polypropylen, Polyethylen, ihrer Copolymere und/oder Blends denkbar.

Für die Haftvermittlerschicht 7 können gebräuchliche Haftvermittler eingesetzt werden. Die Bedruckungsschicht 10 kann mit gebräuchlichen Druckfarben ausgeführt sein, die durch eine transparente Abdeckschicht 11 geschützt werden. Abrieb der Druckfarben ist damit nicht möglich, wodurch eine Kontamination des Füllgutes ausgeschlossen wird.

Andere Schichtabfolgen oder -aufbauten sind denkbar.

Die Folienanordnung kann im Extrusions- oder Coextrusionsverfahren hergestellt werden. Wenn die Schichten oder ein Teil der Schichten einzeln extrudiert werden, so können diese anschließend zusammenkaschiert werden.

Es hat sich aber als sehr erfolgreich erwiesen, wenn die Folienschichten coextrudiert oder zumindest die Folienschichten noch innerhalb des Extruders miteinander verbunden werden.

Blas- und Castverfahren können eingesetzt werden.

Die Folienanordnung 1 kann gereckt oder ungereckt eingesetzt werden.

Es ist auch denkbar, daß die erfindungsgemäße Folienanordnung 1 auch zusammen mit den zusätzlichen Schichten gemeinsam zum Beispiel zu einer Schale tiefgezogen werden kann.

Die Folienanordung 1 kann, wie oben beschrieben, auf eine Schale 5 aufgesiegelt, oder aber gegen andere Folien oder Folienanordnungen gesiegelt werden.

Die Schale 5 kann aus Polyethylen, Polypropylen oder auch mehrlagigen Folienanordnungen bestehen.

Gute Ergebnisse wurden mit Folienanordnungen 1 erzielt, die eine Gesamtdicke von 20 bis 200 µm, vorzugsweise zwischen 30 und 70 µm aufweisen. Die Siegelschicht 2 weist dabei eine Dicke zwischen 1 und 7 µm auf. Die Peelschicht weist eine Dicke von 1 bis 10µm, vorzugsweise zwischen 3 und 7 µm auf. Die Rückenschicht 4 oder die Rückenschicht zusammen mit den weiteren Schichten 7, 8, 9, 10 und 11 weist eine Dicke zwischen 10 und 200 µm auf.

Andere Dicken sind denkbar.

Für die vorliegende Erfindung ist es auch denkbar, daß wenigstens ein Teil der Folienschichten aus nachwachsenden und/oder biologisch abbaubaren Folienschichten bestehen kann. Gerade bei Lebensmittelverpackungen können solche Folienschichten durch andere Folienschichten abgedeckt sein.

## Patentansprüche

1. Kunststoff-Folienanordnung (1) mit Siegel- und Peeleigenschaften, insbesondere zur Verwendung als Deckelfolie, **dadurch gekennzeichnet, daß** die Folienanordnung (1) mindestens eine Siegelschicht (2), eine Peelschicht (3) und eine Rückenschicht (4) auf der von der Siegelschicht (2) abgewandten Seite der Peelschicht (3) aufweist, wobei die Siegelschicht (2) aus vorzugsweise einem mit einem Kunststoff siegelfähigen Material besteht und die Peelschicht (3) aus einem vorzugsweise an der Grenzschicht zur Siegelschicht (2) oder an der Grenzschicht zur Rückenschicht (4) delaminierenden Material besteht und wobei die Rückenschicht (4) aus einem die Peelschicht (3) stützenden Material bestehen kann.

2. Folienanordnung nach Anspruch 1, **dadurch gekennzeichnet, daß** die Siegelschicht (2) als Siegellack, als siegelbare Folienschicht oder dergleichen ausgebildet ist, wobei diese aus Polymeren, vorzugsweise aus Polyolefinen, insbesondere aus Polyethylenen, Polypropylenen, deren Copolymeren und/oder deren Blends bestehen oder auf diesen basieren können.

3. Folienanordnung nach Anspruch 1 oder 2, **dadurch gekennzeichnet, daß** die Peelschicht (3) aus wenigstens einem Polymer besteht, und ein weiteres Material zugefügt ist, wobei das weitere Material ebenfalls ein Polymer sein kann, wobei die Materialien vorzugsweise nur eine eingeschränkte Verträglichkeit miteinander aufweisen.

4. Folienanordnung nach Anspruch 3, **dadurch gekennzeichnet, daß** die Peelschicht (3) aus einem ersten Polyolefin, insbesondere einem Polyethylen und/oder einem Polypropylen und/oder ihren Copolymere und/oder Blends und aus einem zweiten Material, nämlich einem zweiten Polyolefin, insbesondere einem Polyethylen und/oder einem Polypropylen und/oder ihren Copolymere und/oder Blends und/oder ein Acrylat, wobei ein unmodifiziertes oder modifiziertes Polypropylen-Ethylen-Acrylat vorgesehen sein kann.

5. Folienanordnung nach Anspruch 3 oder 4, **dadurch gekennzeichnet, daß** als erstes Polyolefin ein Polypropylen oder Polypropylen Copolymer vorgesehen ist und als zweites Polyolefin ein Polyethylen oder Polyethylen-Copolymer vorgesehen ist.

6. Folienanordnung nach Anspruch 3, 4 oder 5, **dadurch gekennzeichnet, daß** das erste Material zwischen 30 und 70 %, vorzugsweise zwischen 40 und 60% Anteil an der Peelschicht aufweist und das zweite Material zwischen 70 und 30 %, vorzugsweise zwischen 60 und 40 % Anteil an der Peelschicht aufweist.

7. Folienanordnung nach einem der vorangehenden Ansprüche, **dadurch gekennzeichnet, daß** die Rückenschicht (4) aus einem Polymer, insbesondere aus einem Polyolefin, vorzusgweise aus einem Polyethylen und/oder einem Polypropylen, ihren Copolymeren und/oder Blends besteht.

8. Folienanordnung nach Anspruch 7, **dadurch gekennzeichnet, daß** die Rückenschicht (4) ein E-Modul von mindestens 1000 MPa aufweist.

9. Folienanordnung nach einem der vorangehenden Ansprüche, **dadurch gekennzeichnet, daß** auf die Rückenschicht (4) wenigstens eine weitere Folienschicht folgt, wobei diese Barriereeigenschaften aufweisen und wobei auch Haftvermittlerschichten vorgesehen sein können.

10. Folienanordnung nach Anspruch 9, **dadurch gekennzeichnet, daß** als Barriereschichten EVOH- und/oder Polyamid- und/oder Polyvinyldenchlorid-Folienschichten vorgesehen sein können.

11. Folienanordnung nach Anspruch 9 oder 10, **dadurch gekennzeichnet, daß** wenigstens eine weitere Folienschicht vorgesehen ist, die aus einem Polymer, insbesondere aus einem Polyester, einem Polyamid, Polypropylen, Polyethylen, deren Copolymere und Blends hergestellt sein kann.

12. Folienanordnung nach einem der vorangehenden Ansprüche, **dadurch gekennzeichnet, daß** die Folienanordnung (1) im Extrusions oder Coextrusionsverfahren hergestellt ist, wobei ein Cast oder Blasverfahren eingesetzt worden sein kann, und daß die Folienanordnung (1) ungereckt oder gereckt ausgeführt ist.
